# EUROPEAN PATENT APPLICATION

(11) **EP 3 756 772 A1**
(43) Date of publication of application: **30.12.2020**
(21) Application number: 19756707.6
(22) Date of filing: 14.02.2019
(51) Int. Cl.: B05D 7/00, B05C 13/02, B05D 3/00, B05D 1/26, F16C 13/00, H01M 2/14

(54) **NONWOVEN FABRIC COATING MACHINE**

(30) Priority: 20.02.2018 JP 2018027605; 29.03.2018 JP 2018064772; 07.09.2018 JP 2018167450; 14.09.2018 JP 2018172556; 27.09.2018 JP 2018182474; 28.09.2018 JP 2018184235; 30.01.2019 JP 2019014804
(71) Applicant: Mitsubishi Paper Mills Limited, Tokyo 130-0026 (JP)
(72) Inventor: KITO, Masatoshi, Tokyo 130-0026 (JP); KANEDA, Yasuo, Tokyo 130-0026 (JP); KATO, Makoto, Tokyo 130-0026 (JP); SATO, Tomohiro, Tokyo 130-0026 (JP)
(74) Representative: Stöckeler, Ferdinand
(86) International application number: PCT/JP2019/005346
(87) International publication number: WO 2019/163635

(57) **Abstract**

A problem of the present invention is to provide a nonwoven fabric coating machine which can highly prevent occurrence of defects such as pinholes caused by strike-through of a coating liquid, in coating a nonwoven fabric with a coating liquid containing a nonvolatile content dispersed or dissolved in a medium. The nonwoven fabric coating machine includes a coating unit that applies a coating liquid onto a nonwoven fabric, a conveying unit in which the nonwoven fabric applied with the coating liquid is conveyed while supported by a conveyor roller, and a drying unit that dries the applied coating liquid. In the nonwoven fabric coating machine, the surface of the conveyor roller has a concavo-convex shape and water repellency.

## Description

### TECHNICAL FIELD

The present invention relates to a nonwoven fabric coating machine used for coating a nonwoven fabric.

### BACKGROUND ART

A functionality-added product is produced by coating a nonwoven fabric as a substrate with a coating liquid containing a nonvolatile content dispersed or dissolved in a medium. Examples of the nonvolatile content include resins, inorganic particles, and organic particles. Examples of the medium include water and organic solvent. Examples of the functionality-added product include a separator for lithium ion batteries and a filtration membrane.

A separator for lithium ion batteries (hereinafter, sometimes abbreviated to a "separator") is required to be as thin as 30 µm or less for reducing the ratio of the volume of the separator as a non-generation element in the battery. A filtration membrane is required to be thin, because it is desirable that a filtration membrane having a larger area be housed in a module having the same volume for improving filtration performance.

In order to reduce the thickness of the product, a thin nonwoven fabric needs to be used as a substrate. When a thin nonwoven fabric having a thickness of 30 µm or less is used as a substrate, a phenomenon of "strike-through of a coating liquid" occurs. The "strike-through of a coating liquid" is a phenomenon in which a coating liquid exudes to the opposite surface of the nonwoven fabric. Hereinafter, the "strike-through of a coating liquid" is sometimes described as "strike-through". The strike-through raises various problems. Specifically, such problems include difficulties of conveyance due to the adhering of a nonwoven fabric to a conveyor roller or a conveyor support body caused by the exuded coating liquid, coating defects such as pinholes due to a partially insufficient coating amount of a coating liquid to a nonwoven fabric, and decreases in coating uniformity due to re-transfer onto a nonwoven fabric by a coating liquid once transferred to a conveyor roller or a conveyor support body and a solid-dried matter thereof. Especially, since a separator for lithium ion batteries, a filtration membrane, and the like are required to be uniform in physical properties such as pore diameters, the occurrence of coating defects such as pinholes or the decrease in coating uniformity is a serious problem leading to deterioration of performance.

For solving various problems associated with the strike-through, the following technologies have been proposed. An example of such technologies is a method of laminating a nonwoven fabric and a coated layer obtained by coating with a coating liquid on a conveyor support body and peeling the conveyor support body after drying to obtain a product (for example, see Patent Literatures 1 to 4). As the conveyor support body, a dense paper and a resin sheet, in which strike-through does not occur, are disclosed. Another example is a method of laminating two nonwoven fabric layers on each other, impregnating both the nonwoven fabrics with a coating liquid, solidifying the coating liquid from one side, and thereafter peeling the two nonwoven fabric layers from each other to obtain one of them as a product (for example, see Patent Literature 5). However, since the conveyor support body after use and the other of the nonwoven fabrics are disposed, these methods had problems in that the cost is high, and a large amount of waste is generated.

Further another example is a method of conveying a nonwoven fabric after a coating liquid was applied using a specific roller thereby to prevent the deterioration in surface quality associated with the strike-through (for example, see Patent Literatures 6 to 8). Patent Literature 6 discloses a roller on which a groove is disposed in a substantially parallel direction to the traveling direction. Also, Patent Literature 7 discloses a roller having a diameter of 25 mm or less. Furthermore, Patent Literature 8 discloses a smoothing roller. However, in the methods disclosed in Patent Literatures 6 to 8, drawbacks such as pinholes may occur when, for example, a very thin nonwoven fabric is used as a substrate. Thus, there is still room for improving the effect.

Further another example includes a method for preventing the strike-through by using a nonwoven fabric having specific physical properties (for example, see Patent Literature 9) or using a coating liquid having specific physical properties (for example, see Patent Literatures 10 and 11). However, in these methods, the range of choices for the nonwoven fabric or the coating liquid is narrow. Therefore, an optimum nonwoven fabric or coating liquid could not be sometimes selected from the viewpoint of product performance and costs. Especially, since a nonwoven fabric having little strike-through inevitably comes to be a nonwoven fabric having low permeability to liquid and gas, it is often a significant restriction in products intended to transmit substances or ions, such as a separator for lithium ion batteries and a filtration membrane.

### CITATION LIST

### PATENT LITERATURE

Patent Literature 1: JP-A-2005-268096
Patent Literature 2: JP-A-2005-302341
Patent Literature 3: JP-A-2013-186958
Patent Literature 4: JP-A-2013-229118
Patent Literature 5: WO 2008/153117
Patent Literature 6: JP-A-2014-192027
Patent Literature 7: JP-A-2014-192147
Patent Literature 8: JP-A-2015-8109
Patent Literature 9: JP-A-2013-154304
Patent Literature 10: JP-A-2013-115031
Patent Literature 11: JP-A-2014-44857

### SUMMARY OF THE INVENTION

### PROBLEMS TO BE SOLVED BY THE INVENTION

A problem of the present invention is to provide a nonwoven fabric coating machine which can highly prevent occurrence of defects such as pinholes caused by strike-through of a coating liquid, in coating a nonwoven fabric with a coating liquid containing a nonvolatile content dispersed or dissolved in a medium.

### SOLUTION TO THE PROBLEM

Means for solving the problem of the present invention is as follows.
(1) A nonwoven fabric coating machine which includes: a coating unit that applies a coating liquid onto a nonwoven fabric; a conveying unit in which the nonwoven fabric applied with the coating liquid is conveyed while supported by a conveyor roller; and a drying unit that dries the applied coating liquid. A surface of the conveyor roller has a concavo-convex shape and water repellency.
(2) The nonwoven fabric coating machine according to (1), in which the conveyor roller is a roller having a surface covered by a water-repellent concavo-convex sheet.
(3) The nonwoven fabric coating machine according to (1), in which the conveyor roller is a roller having a surface that is made of polyolefin and has a concavo-convex shape formed by machining.
(4) The nonwoven fabric coating machine according to (1), in which the conveyor roller is a roller having a surface that has a concavo-convex shape formed by a processing method selected from the group consisting of a cut knurling process, a roller knurling process, and laser engraving.
(5) The nonwoven fabric coating machine according to (4), in which the conveyor roller is a metal roller.
(6) The nonwoven fabric coating machine according to any one of (2) to (5), in which a pitch of a concavity and convexity is 300 to 1000 µm, a space/pitch is 0.3 to 0.6, a height of a concavity and convexity is 50 to 200 µm, and a surface contact angle is 85° or more.
(7) The nonwoven fabric coating machine according to (1), in which the conveyor roller is a roller subjected to a thermal spraying water-repellent process.
(8) The nonwoven fabric coating machine according to (1), in which the conveyor roller is a roller subjected to a blasting water-repellent plating process.
(9) The nonwoven fabric coating machine according to (1), in which the conveyor roller is a roller covered by a water-repellent fabric.

### EFFECTS OF THE INVENTION

The nonwoven fabric coating machine of the present invention can highly suppress occurrence of defects such as pinholes caused by strike-through of a coating liquid, in coating a nonwoven fabric with a coating liquid containing a nonvolatile content dispersed or dissolved in a medium.

### BRIEF DESCRIPTION OF THE DRAWINGS

Fig. 1 is a schematic diagram illustrating an example of the nonwoven fabric coating machine of the present invention.
Fig. 2 is a cross-sectional diagram illustrating an example of the pattern of a concavo-convex shape formed on a conveyor roller used in the present invention.
Fig. 3 is a cross-sectional diagram illustrating an example of the pattern of a concavo-convex shape formed on a conveyor roller used in the present invention.
Fig. 4 is a cross-sectional diagram illustrating an example of the pattern of a concavo-convex shape formed on a conveyor roller used in the present invention.
Fig. 5 is a cross-sectional diagram illustrating an example of the surface shape of a conveyor roller subjected to a thermal spraying process.
Fig. 6 is a cross-sectional diagram illustrating an example of the surface shape of a conveyor roller subjected to a thermal spraying water-repellent process.
Fig. 7 is a cross-sectional diagram illustrating an example of the surface shape of a conveyor roller subjected to a thermal spraying water-repellent process (before damaged).
Fig. 8 is a cross-sectional diagram illustrating an example of the surface shape of a conveyor roller subjected to a thermal spraying water-repellent process (after damaged).
Fig. 9 is a cross-sectional diagram illustrating an example of the pattern of a concavo-convex shape on a conveyor roller subjected to a blasting process used in the present invention.
Fig. 10 is a cross-sectional diagram illustrating an example of the pattern of a concavo-convex shape on a conveyor roller subjected to a blasting water-repellent plating process used in the present invention.
Fig. 11 is a diagram illustrating an example of the surface pattern of a glass cloth utilized for a water-repellent fabric used in the present invention.
Fig. 12 is a cross-sectional diagram illustrating an example of the water-repellent fabric used in the present invention.

### DESCRIPTION OF THE EMBODIMENTS

The present invention is a nonwoven fabric coating machine for coating a nonwoven fabric. More particularly, the present invention is a nonwoven fabric coating machine for coating a nonwoven fabric with a coating liquid containing a nonvolatile content dispersed or dissolved in a medium. The nonwoven fabric coating machine of the present invention includes a coating unit that applies a coating liquid onto a nonwoven fabric, a conveying unit in which the nonwoven fabric applied with the coating liquid is conveyed while supported by a conveyor roller, and a drying unit that dries the applied coating liquid.

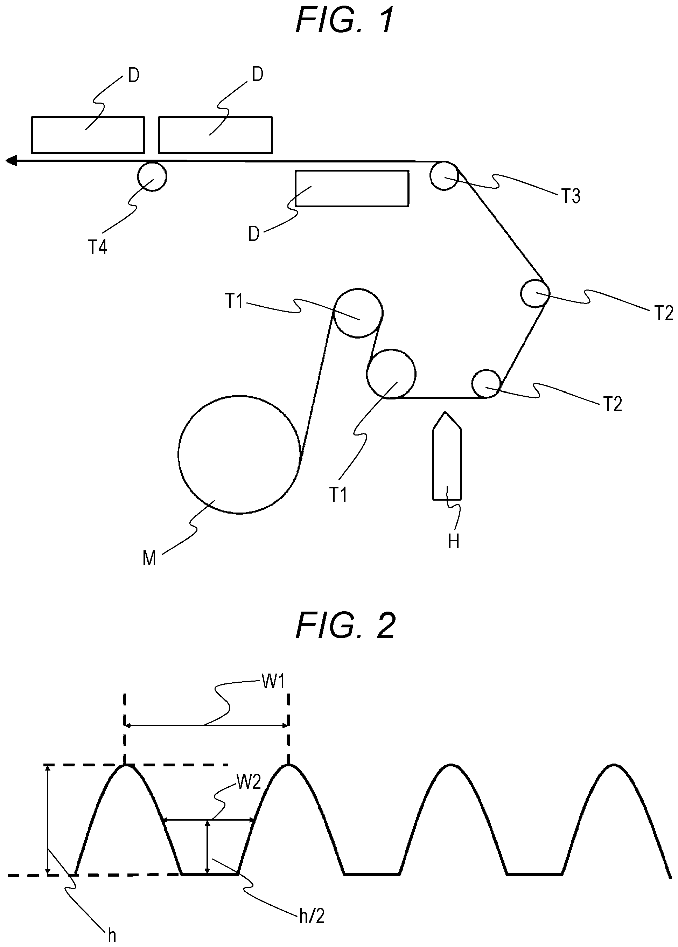

Fig. 1 is a schematic diagram illustrating an example of the nonwoven fabric coating machine of the present invention. By an unwinder, a nonwoven fabric is drawn from a nonwoven fabric roll M. The nonwoven fabric is delivered to a coating unit H while supported by a conveyor roller T1. Next, a coating liquid is applied to one surface of the nonwoven fabric by the coating unit H. Thereafter, the nonwoven fabric travels while a surface opposite the coating liquid-applied surface is supported by one or more conveyor rollers T2, T3, and T4. Further, the nonwoven fabric is dried by a drying unit D. The conveyor roller T3 is a conveyor roller that exists before the drying unit D and that is influenced by heat from the drying unit D. The conveyor roller T2 is a conveyor roller that exists between the coating unit H and the conveyor roller T3 and that is not influenced by heat from the drying unit D. The conveyor roller T4 is a conveyor roller that exists in the drying unit D and that is influenced by heat more than the conveyor roller T3.

The conveyor roller is a roller used for determining the traveling direction of the nonwoven fabric or stabilizing the travel of the nonwoven fabric in the nonwoven fabric coating machine. Examples of the core material of the conveyor roller include metal, plastics, and fiber-reinforced plastics. Examples of the metal include iron, stainless, aluminum, brass, and phosphor bronze. Examples of the plastics include fluorine-based resins; silicone-based resins; urethane-based resins; acryl-based resins; and olefin-based resins such as acrylonitrile-butadiene-styrene copolymer (ABS) resins and polyethylene, polypropylene, ethylene-propylene copolymer resins. An example of the fiber-reinforced plastics is a composite made of a fiber material having a high elastic modulus, such as carbon fiber, glass fiber, aramid fiber, and boron fiber, and thermosetting resins such as unsaturated polyester-based resins, epoxy-based resins, phenol-based resins, and melamine-based resins; and thermoplastic resins such as acryl-based resins such as polymethyl methacrylate.

A technological characteristic of the nonwoven fabric coating machine of the present invention is that the surface of the conveyor roller has a concavo-convex shape and water repellency. Hereinafter, a "conveyor roller including a surface having a concavo-convex shape and water repellency" is sometimes abbreviated to a "conveyor roller Z". The contact angle of water on the conveyor roller is preferably 85° or more. However, the maximum value thereof is theoretically 180°. When the contact angle of water is 85° or more, there can be easily obtained an effect that the nonwoven fabric does not adhere to the conveyor roller, and the coating liquid which has struck through is unlikely to attach to the conveyor roller. The larger the contact angle is, the more unlikely the coating liquid which has struck through attaches to the conveyor roller. Therefore, it is preferable that the contact angle is as large as possible. The contact angle was measured as follows. That is, an automatic static contact angle was measured at ten locations in the range of a 5 cm square in a room at a room temperature of 23°C and a relative humidity of 50%, using a portable contact angle meter PG-X+ (Fibo System AB, Sweden). The average value of the measured angles was defined as a contact angle. The distilled water dropping amount was 4.0 µL. Examples of the method of imparting water repellency to the conveyor roller include a method of forming a concavo-convex shape on a roller made of a water-repellent material and a method of covering the surface of the conveyor roller with a water-repellent material by a measure such as sticking, painting, and plating.

An example of a conveyor roller Z(I) is a roller having a surface covered by a water repellent concavo-convex sheet. Although the material of the concavo-convex sheet is not particularly limited, the concavo-convex sheet is preferably made of polyethylene, polypropylene, a fluorine resin, or a silicone resin in which the contact angle of water is already of 85° or more. Alternatively, the concavo-convex sheet may be a sheet obtained by coating a sheet surface having a contact angle of water of less than 85° with a water-repellent agent. The water-repellent agent is preferably fluorine resins or silicone resins.

An example of a conveyor roller Z(II) is a roller having a surface that is made of polyolefin and has a concavo-convex shape formed by machining. When the material of the surface of the conveyor roller is polyolefin, the surface has water repellency and does not particularly need to be processed. For a conveyor roller obtained by processing a metal roller to form a concavo-convex shape, the surface of the conveyor roller needs to be covered by a material made of polyolefin after the processing. Examples of polyolefin include ultra high molecular weight polyethylene and polypropylene which have a contact angle of water of 85° or more. The conveyor roller Z(II) is more excellent in durability than the conveyor roller Z(I).

An example of a conveyor roller Z(III) is a roller including a surface having a concavo-convex shape formed by a processing method selected from the group consisting of a cut knurling process, a roller knurling process, and laser engraving. Among these, in the cut knurling process, a concavo-convex shape can be formed for a short time, the process can be performed depending on the material and shape optimal for the coating method, and a load on the conveyor roller is small.

When the material of the roller surface in the conveyor roller Z(III) originally has water repellency, a process is not particular necessary. When a concavo-convex shape is formed by processing a metal roller or the like, a water-repellent process is thereafter performed. Examples of the water-repellent process to be used include measures such as coating with a water-repellent resin and water-repellent plating. In terms of durability, water-repellent plating is preferable, and composite plating containing polytetrafluoroethylene (PTFE) is further suitably used.

In the conveyor rollers Z(I) to Z(III), the pattern of the concavo-convex shape is not particularly limited. Examples of the shape of the convex portion include conical, polygonal pyramid, dome, silk, and diamond. In the conveyor roller Z(III), silk or diamond is more preferable, and diamond is further preferable, in terms of facilitating the process and reducing the contact area. Figs. 2 to 4 are a cross-sectional diagram illustrating an example of the pattern of the concavo-convex shape of the conveyor rollers Z(I) to Z(III).

In the conveyor rollers Z(I) to Z(III), the pitch W1 of the concavity and convexity is preferably 300 to 1000 µm, and more preferably 400 to 700 µm. In the present invention, the "pitch" of the concavity and convexity is a distance from the top of one convex portion to the top of the neighboring convex portion. When the pitch W1 is 300 to 1000 µm, there can be easily obtained an effect that the coating liquid which has struck through is rarely transferred to the conveyor roller Z.

In the conveyor rollers Z(I) to Z(III), the height h of the concavity and convexity is preferably 50 to 200 µm, and more preferably 75 to 120 µm. In the present invention, the "height" of the concavity and convexity is a height (distance in the Z direction) from the top of the convex portion to the valley of the concave portion. When the height h is 50 to 200 µm, there can be easily obtained an effect that the nonwoven fabric does not adhere to the conveyor roller, and the pattern of the concavity and convexity is not transferred to the coated layer.

In the conveyor rollers Z(I) to Z(III), the space W2/pitch W1 of the concavity and convexity is preferably 0.3 to 0.6, and more preferably 0.4 to 0.5. In the present invention, the space W2 is, as illustrated in Fig. 2, a distance linking midpoints h/2, between the top of the convexity and the valley of the concave portion, of the neighboring convex portions. When the space W2/pitch W1 is 0.3 to 0.6, there can be easily obtained an effect that the coating liquid which has struck through is rarely transferred to the conveyor roller.

An example of a conveyor roller Z(IV) is a roller subjected to a thermal spraying water-repellent process. The thermal spraying water-repellent process is performing a thermal spraying process to the surface of a conveyor roller material and thereafter performing a water-repellent process. The thermal spraying process is a process of melting or semi-melting a covering material and thereafter bringing the covering material into collision with the surface of a conveyor roller material for lamination thereby to form a film. In this process, a conveyor roller having excellent wear resistance and heat resistance can be formed. Examples of a usable covering material include metal, alloy, ceramics, plastics, and glass. Among these, metal and ceramics are more preferable. Metal and ceramics may be based on, for example, nickel, tungsten, and nickel-aluminum. In the thermal spraying process, a concavo-convex shape is formed on the surface. The thermal spraying based on nickel or tungsten can suitably provide a surface shape having an appropriate concavity and convexity of about Ra: 3 to 15 µm and Rz: 30 to 100 µm and having excellent wear resistance.

A concavo-convex shape is formed on the roller surface subjected to the thermal spraying process. On the surface, a concavo-convex period at microscopic intervals of several tens of µm or less is formed. The roller surface comes in contact with a nonwoven fabric to be conveyed in a nearly point contact state while the nonwoven fabric is conveyed. Therefore, the coating liquid which has struck through is rarely transferred onto the conveyor roller.

Also, the concave portion of the concavo-convex period at microscopic intervals formed by the thermal spraying process is usually subjected to a hole sealing process by a method such as resin coating. This can prevent the attachment of dirt and improve the performance of the film. In the present invention, the water-repellent process after the thermal spraying process can be any water-repellent process as long as water-repellent resins such as silicone-based resins and fluorine-based resins are formed on the surface by a measure such as coating, plating, or plasma treatment. However, it is preferable to form a water-repellent resin layer on the entire surface and also to form a water-repellent resin layer so as to fill the concave portion of the microscopic concavo-convex period formed by the thermal spraying process. In this case, coating with silicone-based resins or fluorine-based resins is suitably used. Examples of the fluorine-based resins to be used include polytetrafluoroethylene (PTFE), a tetrafluoroethylene-hexafluoropropylene copolymer (FEP), and a tetrafluoroethylene-perfluoroalkylvinylether copolymer (PFA). Examples of the silicone-based resins include silicone resins and silicone rubbers. The surface after the thermal spraying process may be washed and polished prior to the water-repellent process for refining the shape of the surface. Accordingly, the adhesion with the water-repellent resins can be improved. For the purpose of improving the abrasion resistance of the water-repellent resin layer, abrasion-resistant fillers, such as flake mica, micaceous iron oxides, plate-like titanium oxides, and plate-like silicon carbides, may be mixed as a filler.

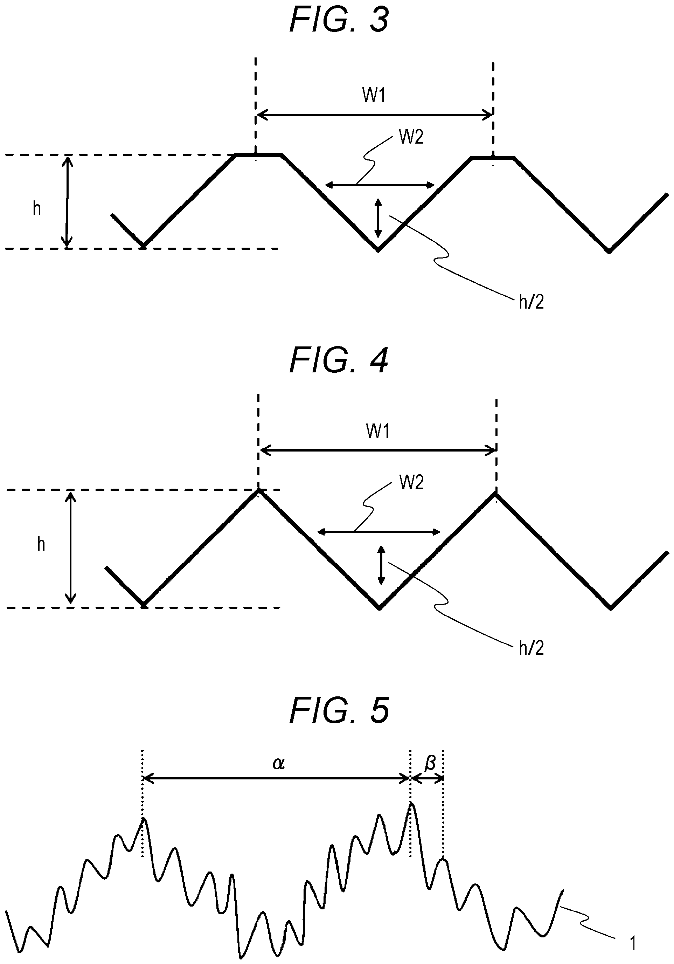

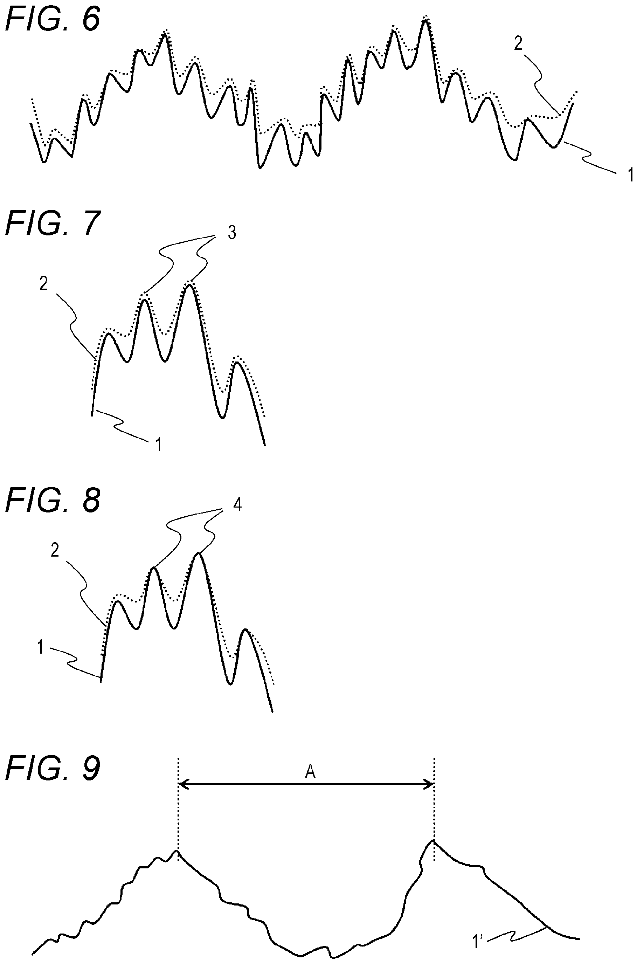

The conveyor roller surface subjected to the thermal spraying water-repellent process in the conveyor roller Z(IV) can have various concavo-convex shapes, if it has been formed by the thermal spraying process. Although it is difficult to control the surface shape in detail by the thermal spraying process and also to express the shape, description will be made using Fig. 5 and Fig. 6. Fig. 5 is a cross-sectional diagram illustrating an example of the surface shape of a conveyor roller subjected to a thermal spraying process. A surface shape 1 after a thermal spraying process includes a concavo-convex period of 100 µm or more represented by α and additionally a microscopic concavo-convex period of several tens of µm or less represented by β. Fig. 6 is a cross-sectional diagram illustrating an example of the surface shape of a conveyor roller subjected to a thermal spraying water-repellent process. Fig. 6 is also a cross-sectional diagram illustrating a surface shape 2 after a water-repellent process in which the surface shape 1 after a thermal spraying process as illustrated in Fig. 5 has been coated with a water-repellent resin. The water-repellent resin is applied, as illustrated in Fig. 6, so as to cover the entire surface to constitute a water-repellent resin layer, such that the concave portion of the surface shape 1 after a thermal spraying process is filled.

During use for a long term and during maintenance work such as washing work, the roller surface of the nonwoven fabric coating machine of the present invention is sometimes worn by repeated physical contact or scratched and damaged by sudden mechanical contact. In such a case, a conveyor roller subjected to a common water-repellent process sometimes lowered water repellency in the damaged portion and reduced an effect that the coating liquid is rarely transferred to the conveyor roller. In such a case, the roller needs to be replaced with a new roller in the worst scenario. However, for the conveyor roller Z(IV) subjected to a thermal spraying water-repellent process, such an effect is unlikely to be reduced. Fig. 7 and Fig. 8 illustrate the surface shape of a conveyor roller subjected to a thermal spraying water-repellent process before and after damaged. The surface shape is a surface shape of a conveyor roller obtained by performing a water-repellent process onto the surface shape 1 after a thermal spraying process to form the surface shape 2 after a water-repellent process. A water-repellent resin layer formed in a convex portion 3 of the surface shape before damaged illustrated in Fig. 7 is removed in a convex portion 4 of the surface shape after damaged illustrated in Fig. 8, and the surface shape 1 after a thermal spraying process is not covered by the water-repellent resin layer. The convex portion (reference numeral 3 in Fig. 7 and reference numeral 4 in Fig. 8) serves as a portion that comes into point contact with the conveyed nonwoven fabric. However, in the present invention, even if the water-repellent resin layer disappears on this convex portion 4, a sufficient water-repellent resin layer still exists in the periphery thereof. Therefore, the transfer suppression effect of strike-through is favorably retained.

An example of a conveyor roller Z(V) is a conveyor roller subjected to a blasting water-repellent plating process. The blasting water-repellent plating process is performing a blasting process to the surface of a conveyor roller material and thereafter performing a water-repellent plating process. The blasting process is a processing method of spraying an abrasive on the surface of a material to ground the material surface for deforming the shape. The abrasive used in the blasting process is also called a projection material. The projection material to be used is not particularly limited as long as it can be projected. Examples thereof include metal particles and ceramic particles. A desired surface shape can be formed on a conveyor roller by controllering the type (particle diameter, composition, density, hardness, and strength) of a projection material, the projection condition (speed, projection angle, and projection amount), and the like.

In the blasting water-repellent plating process, a water-repellent plating process is performed after the blasting process. A concavo-convex shape has been formed on the roller surface subjected to the blasting process. On the roller surface, surface contaminants such as oil content usually attaching on the roller surface before the process are completely removed, and only a roller material exists. Therefore, such a roller surface is suitable for a subsequent water-repellent plating process. That is, when a water-repellent plating process is performed without performing a blasting process, contaminants on the roller surface cause plating failures, which inhibits the formation of a good plated film. Therefore, when a blasting process is performed before a water-repellent plating process, a firm plated film can be uniformly formed on the roller surface, and a conveyor roller usable for a long term can be obtained.

As a water-repellent plating process, a processing method of imparting water repellency to the surface by a composite plating technology is used. The composite plating technology is a technology of previously adding a slight amount of solid particles to a plating solution in performing plating and depositing (codepositing) the solid particles in a plated film while depositing metal so that properties absent in a usual plated film are imparted to a plated film depending on the type of solid particles. In the water-repellent plating process of the present invention, water repellency-imparting solid particles are used as solid particles to perform a water-repellent plating process. Examples of the water repellency-imparting solid particles include fluorine-based resins such as polytetrafluoroethylene (PTFE) resins and fluorinated graphite.

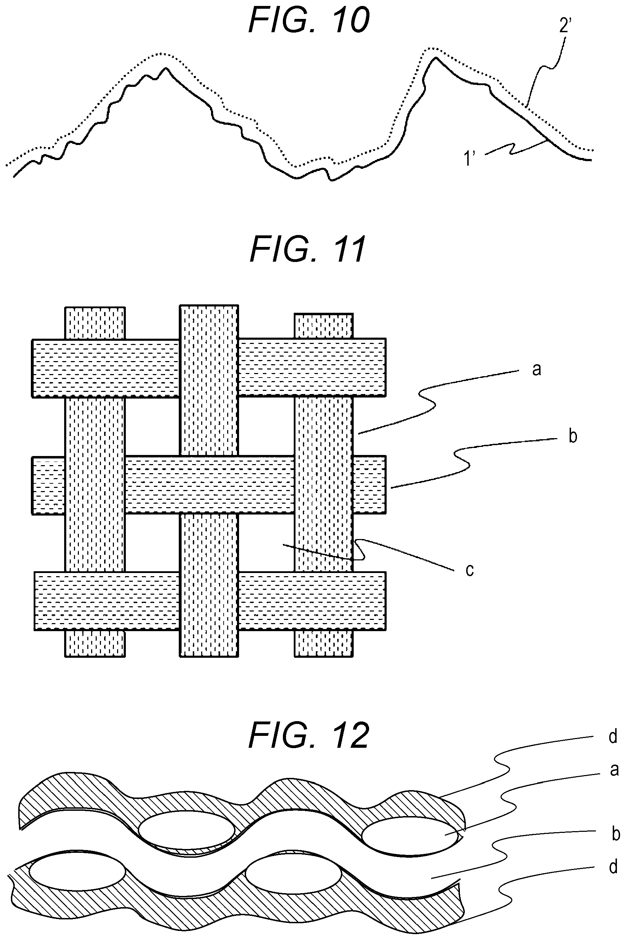

The conveyor roller surface subjected to the blasting water-repellent plating process in the conveyor roller Z(V) can have various concavo-convex shapes, if it has been formed by a blasting process. Explanation will be made by Fig. 9 and Fig. 10. Fig. 9 is a cross-sectional diagram illustrating a surface shape 1' after a blasting process. Fig. 10 is a diagram illustrating a surface shape 2' after performing a water-repellent plating process on a concavo-convex shape having a period represented by reference sign A of 100 µm or more and 1000 µm or less. A water-repellent plating process is performed so as to cover the entire surface as illustrated in Fig. 10. For the period A, the RSm value as a surface roughness parameter is used.

During use for a long term and during maintenance work such as washing work, the roller surface in the nonwoven fabric coating machine of the present invention is sometimes subjected to repeated physical contact or sudden mechanical contact. In such a case, the conveyor roller Z(V) subjected to a water-repellent plating process is rarely damaged. That is, a component to contribute to water repellency in the water-repellent plating process of the present invention resides in water repellency-expressing solid particles used in composite plating. The solid particles are contained in a firm plated film and thus damage is rarely caused. Compared to the conveyor roller having a water-repellent resin layer formed by applying a water-repellent resin, the conveyor roller subjected to a composite plating process is rarely damaged, excellent in abrasion resistance, and capable of maintaining good water repellency for a long term.

As the projection material used in the blasting process for the conveyor roller Z(V), a projection material based on either metal or non-metal can be used. In the blasting process, a surface shape having an appropriate concavity and convexity with an Ra of about 5 to 30 µm is formed. Accordingly, the attachment of the coating liquid is suppressed, and a clean surface suitable for water-repellent plating is formed.

In the present invention, parameters related to surface roughness such as Ra, period A, and Rz were measured at a cutoff value of 2.5 mm and an evaluation length of 12.5 mm, using a contact surface roughness tester (SURFCOM FLEX (registered trademark), manufactured by Tokyo Seimitsu Co., Ltd.), in accordance with JIS B 0601: 2001.

As the composite plating used in the water-repellent plating process, any combination of metal plating and water repellency-imparting solid particles can be used. However, nickel·PTFE composite plating can be suitably used as composite plating that can favorably form a firm, uniform plated film and provide high water repellency.

An example of a conveyor roller Z(VI) is a roller covered by a water-repellent fabric. A water-repellent fabric is obtained by coating a fabric with a water-repellent resin.

Fig. 11 is a diagram illustrating an example of the surface pattern of a glass cloth utilized for a water-repellent fabric used in the conveyor roller Z(VI). In the present invention, the fabric has, as illustrated in Fig. 11, a portion where a warp a and a woof b overlap and a portion where they do not overlap. In the portion where they do not overlap, a space c exists. The fabric has a concavo-convex shape specific to fabrics. A material constituting the fabric is not particularly limited. However, for use as the conveyor roller T4, the material preferably does not thermally deform in an irreversible manner at a temperature used in the drying unit D. Examples of such a material include glass fiber, aramid resin fiber, polyimide resin fiber, and phenolic resin fiber.

A water-repellent resin used in the conveyor roller Z(VI) is not particularly limited as long as it does not thermally deform in an irreversible manner at a temperature used in the drying unit D. Examples thereof include fluorine-based resins such as polytetrafluoroethylene, a tetrafluoroethylene-hexafluoropropylene copolymer, and a tetrafluoroethylene-perfluoroalkylvinylether copolymer; and silicone-based resins such as silicone resins and silicone rubbers.

For the purpose of improving abrasion resistance, abrasion-resistant fillers, such as flake mica, micaceous iron oxides, plate-like titanium oxides, and plate-like silicon carbides, may be mixed as a filler into a water-repellent resin.

Fig. 12 is a cross-sectional diagram illustrating an example of the water-repellent fabric used in the present invention. As illustrated in Fig. 12, when a fabric made of the warp a and the woof b is covered by a water-repellent resin layer d, the space c as a portion where the warp a and the woof b do not overlap as illustrated in Fig. 11 is absent. This can suppress intrusion of the coating liquid which has struck through into the space c.

Since the space c is covered by the water-repellent resin layer d, both the warp and the woof preferably have a yarn count of 5.6 tex or more and 200 tex or less and a weave density of not less than 30 yarns/25 mm and not more than 80 yarns/25 mm. The weaving structure is preferably plain weave, satin weave, or twill weave. The yarn count and weave density may be different between the warp and the woof. For reducing a contact area between the conveyor roller and the nonwoven fabric, the conveyor roller surface preferably has an Ra of 3 to 30 µm. Also, even if the surface of the conveyor roller Z(VI) is damaged by physical contact during use for a long term or during maintenance work, replacement can be simply performed, and good effects can be retained for a long term with simple maintenance.

The conveyor roller Z provides the following advantageous effects. That is, since the coating liquid which has struck through is rarely transferred onto the conveyor roller, the nonwoven fabric rarely adheres to the conveyor roller, and conveyance is stabilized. Also, coating failures such as pinholes rarely occur on the obtained coated layer. Furthermore, a coating liquid transferred onto the conveyor roller is prevented from being re-transferred onto the nonwoven fabric with the result that the coated layer becomes non-uniform. The reason why these effects are obtained is that the concavity and convexity of the conveyor roller surface can decrease the contact area between the conveyor roller and the nonwoven fabric.

In the present invention, the conveyor roller Z conveys a nonwoven fabric after a process (coating process) of applying a coating liquid on one surface of the nonwoven fabric until a process (drying process) of drying the nonwoven fabric. While conveyed, a surface opposite the coating liquid-applied surface of the nonwoven fabric is appropriately supported by the conveyor roller. The conveyor roller Z is used for at least one or more of the conveyor rollers T2 to T4. Therefore, the conveyor roller Z may be used for all the conveyor rollers T2 to T4. The conveyor roller T2, which exists between the coating unit H and the conveyor roller T3 before the drying unit D, is a conveyor roller not influenced by heat from the drying unit D. Therefore, any conveyor roller having a concavo-convex surface and water repellency can be used.

The conveyor rollers Z(I) and Z(II) can be used as the conveyor rollers T2 and T3. Also, the conveyor rollers Z(III) is more excellent in heat resistance than the conveyor rollers Z(I) and Z(II). Therefore, the conveyor roller Z(III) can be used not only as the conveyor rollers T2 and T3 but also as the conveyor roller T4. Especially, a metal roller having excellent heat resistance is suitable for the conveyor roller T4. Furthermore, the process in the drying unit D can be performed at higher drying temperatures.

The conveyor rollers Z(IV) to Z(VI), which can also have high heat resistance, can be used not only as the conveyor rollers T2 and T3 but also as the conveyor roller T4 in the drying unit D. When the conveyor rollers Z(IV) to Z(VI) are used as the conveyor roller T4, the drying temperature of the drying unit D can be increased, which enhances the flexibility of the process to contribute to the improvement of productivity.

Also, when the coating liquid attaches to the conveyor roller T4 for some reason resulting in the occurrence of fixing of dirt, the surface needs to be washed. In the washing, physical force is sometimes added on the surface of the conveyor roller to remove the fixed substance. When the conveyor rollers Z(IV) to Z(VI) having improved abrasion resistance are used as the conveyor roller T4, the conveyor roller surface is rarely damaged even when the above-described physical contact occurs on the T4 roller surface. Thus, the transfer suppression effect of strike-through is favorably retained. Also, the conveyor rollers Z(IV) to Z(VI) having excellent wear resistance are preferably adopted as a conveyor roller in a position where mechanical contact to the surface is likely to occur or as a conveyor roller in a position where mechanical contact is necessary for surface cleaning or the like during maintenance work.

In the present invention, the coating unit H is not particularly limited. However, when an excessively large amount of the coating liquid strikes through, an adverse effect attributable to the strike-through becomes difficult to be prevented even by the present invention. Therefore, it is preferable to use a coating unit by which dynamic pressure in the thickness direction rarely occurs. The dynamic pressure in the thickness direction causes strike-through of a large amount of the coating liquid. Specifically, a coating unit such as a kiss-touch gravure coater, a kiss roller coater, a die coater, a curtain coater, or a spray coater is preferably used.

In the present invention, the drying unit D is not particularly limited. Examples of the drying unit include an air dryer to blow hot air or dry air onto the surface of a nonwoven fabric for drying, a cylinder dryer to bring a nonwoven fabric into contact with the surface of a heated metal cylinder for heat drying, and an infrared dryer to heat a nonwoven fabric with infrared light.

In the drying, it is preferable to firstly dry a surface opposite the coating liquid-applied surface, in terms of a small attaching amount of the coating liquid and rapid drying.

In the present invention, the nonwoven fabric is also not particularly limited. However, when a thick nonwoven fabric is used, the strike-through of the coating liquid is basically rarely caused. Thus, the use of such a thick nonwoven fabric lacks in motivation for using the technology of the present invention. On the other hand, when a thin nonwoven fabric, specifically, a nonwoven fabric having a thickness of 30 µm or less, is used, the uniformity of coating can be significantly improved by the present invention.

Also, the conveyor roller T1 existing before the coating unit H is not particularly limited. For the conveyor roller T1, any of metals, resins, and fiber-reinforced plastics can be used. Examples of the metals include iron, stainless, aluminum, brass, and phosphor bronze. Examples of the resins include fluorine-based resins; silicone-based resins; urethane-based resins; acryl-based resins; ABS resins; and polyolefin-based resins such as polyethylene, polypropylene, and ethylene propylene copolymer resins. An example of the fiber-reinforced plastics is a composite made of a material having a high elastic modulus, such as carbon fiber, glass fiber, aramid fiber, and boron fiber, and thermosetting resins such as unsaturated polyester-based resins, epoxy-based resins, phenol-based resins, and melamine-based resins, or thermoplastic resins such as acryl-based resins such as polymethyl methacrylate.

Inside the drying unit D and after the drying unit D, the transfer suppression effect of strike-through is not necessary for a conveyor roller used to support a nonwoven fabric in which at least a part of a medium has evaporated, and an applied coating liquid has lost fluidity. That is, a conveyor roller having no concavo-convex shape or water repellency can be used. However, for a conveyor roller used inside the drying unit D, a conveyor roller having resistance to the temperature in the drying unit D needs to be used.

### EXAMPLES

Hereinafter, the present invention will be described in further detail by examples. However, the present invention is not limited to the examples.

### [Nonwoven fabric]

There was used a wet-laid nonwoven fabric made of 70 parts by mass of polyethylene terephthalate-based fiber staple having a fineness of 0.1 dtex and a cut length of 3 mm and 30 parts by mass of polyethylene terephthalate binder fiber staple having a fineness of 0.2 dtex and a cut length of 3 mm, which had been added with strength and adjusted in thickness by a heat calender at a surface temperature of 200°C. The wet-laid nonwoven fabric had a basis weight of 8 g/m² and a thickness of 12 µm.

### [Coating liquid]

There was prepared a coating liquid which contains 100 parts by mass (based on solid content) of an alumina hydrate (boehmite), 2.0 parts by mass (based on solid content) of acryl-based polymer latex, 0.4 part by mass (based on solid content) of a sodium salt of a maleic acid-acrylic acid copolymer, and 0.2 part by mass (based on solid content) of carboxymethylcellulose sodium salt (CMC-Na). The medium of the coating liquid was water. The solid content concentration of the coating liquid is 20% by mass. The viscosity at 20°C of a 1% by mass aqueous solution of the used CMC-Na was 7000 mPa·sec.

### [Measurement of water repellency]

In the present invention, water repellency was measured as follows. That is, an automatic static contact angle was measured at ten locations in the range of a 5 cm square in a room at a room temperature of 23°C and a relative humidity of 50%, using a portable contact angle meter PG-X+ (Fibo System AB, Sweden). The average value of the measured angles was defined as a water repellency. The distilled water dropping amount was 4.0 µL.

### <Conveyor roller Z(I)>

### [Example 1-1]

By the apparatus schematically illustrated in Fig. 1, the nonwoven fabric was coated with the coating liquid such that the WET coating amount containing a medium (water) became 50 g/m². As the coating unit H, a die coater was used. As the drying unit D, a one-side air dryer having an effective length of 30 cm was used. With the one-side air dryer, hot air was blown onto a surface of the nonwoven fabric on which the coating liquid was not applied. Subsequently, with two one-side air dryers having an effective length of 30 cm, hot air was blown onto a surface of the nonwoven fabric on which the coating liquid was applied. As the conveyor rollers T2 and T3 existing between the coating unit H and the drying unit D, there was used a 60 mm diameter roller containing aluminum alloy as a core material, covered by a concavo-convex polyethylene (PE) sheet. As the conveyor roller T4, there was used a 60 mm diameter roller including aluminum alloy as a core material. The concavo-convex PE sheet was pasted with spray glue in such a manner that no overlap or space was generated. In the concavo-convex PE sheet, the shape of the convex portion was conical, the pitch W1 of the concavity and convexity was 600 µm, the height h of the concavity and convexity was 100 µm, the space W2/pitch W1 of the concavity and convexity was 0.45, and the contact angle of water was 88°. The coating speed was set at 2 m/min.

### [Example 1-2]

The nonwoven fabric was coated in the same manner as in Example 1-1, except that a concavo-convex polypropylene (PP) sheet was used instead of a concavo-convex PE sheet. In the concavo-convex PP sheet, the pitch W1 of the concavity and convexity was 700 µm, the height h of the concavity and convexity was 120 µm, the space W2/pitch W1 of the concavity and convexity was 0.40, and the contact angle of water was 94°.

### [Example 1-3]

The nonwoven fabric was coated in the same manner as in Example 1-1, except that a concavo-convex polytetrafluoroethylene (PTFE) sheet was used instead of a concavo-convex PE sheet. In the concavo-convex PTFE sheet, the pitch W1 of the concavity and convexity was 600 µm, the height h of the concavity and convexity was 100 µm, the space W2/pitch W1 of the concavity and convexity was 0.45, and the contact angle of water was 110°.

### [Example 1-4]

The nonwoven fabric was coated in the same manner as in Example 1-1, except that in the concavo-convex PE sheet, the pitch W1 of the concavity and convexity was 450 µm, the height h of the concavity and convexity was 110 µm, the space W2/pitch W1 of the concavity and convexity was 0.55, and the contact angle was 90°.

### [Example 1-5]

The nonwoven fabric was coated in the same manner as in Example 1-1, except that in the concavo-convex PE sheet, the pitch W1 of the concavity and convexity was 560 µm, the height h of the concavity and convexity was 200 µm, the space W2/pitch W1 of the concavity and convexity was 0.57, and the contact angle of water was 89°.

### [Example 1-6]

The nonwoven fabric was coated in the same manner as in Example 1-1, except that in the concavo-convex PE sheet, the pitch W1 of the concavity and convexity was 600 µm, the height h of the concavity and convexity was 50 µm, the space W2/pitch W1 of the concavity and convexity was 0.60, and the contact angle of water was 89°.

### [Example 1-7]

The nonwoven fabric was coated in the same manner as in Example 1-1, except that in the concavo-convex PE sheet, the pitch W1 of the concavity and convexity was 1500 µm, the height h was 300 µm, and the space W2/pitch W1 was 0.57. The contact angle of water was 89°.

### [Example 1-8]

The nonwoven fabric was coated in the same manner as in Example 1-1, except that in the concavo-convex PE sheet, the pitch W1 of the concavity and convexity was 600 µm, the height h was 100 µm, and the space W2/pitch W1 was 0.22. The contact angle of water was 89°.

### [Example 1-9]

The nonwoven fabric was coated in the same manner as in Example 1-1, except that in the concavo-convex PE sheet, the pitch W1 of the concavity and convexity was 300 µm, the height h was 100 µm, and the space W2/pitch W1 was 0.60. The contact angle of water was 89°.

### [Example I-10]

The nonwoven fabric was coated in the same manner as in Example 1-1, except that in the concavo-convex PE sheet, the pitch W1 of the concavity and convexity was 1000 µm, the height h was 120 µm, and the space W2/pitch W1 was 0.50. The contact angle of water was 89°.

### [Example I-11]

The nonwoven fabric was coated in the same manner as in Example 1-1, except that in the concavo-convex PE sheet, the pitch W1 of the concavity and convexity was 700 µm, the height h was 75 µm, and the space W2/pitch W1 was 0.40. The contact angle of water was 89°.

### [Example 1-12]

The nonwoven fabric was coated in the same manner as in Example 1-1, except that in the concavo-convex PE sheet, the pitch W1 of the concavity and convexity was 500 µm, the height h was 100 µm, and the space W2/pitch W1 was 0.45. The contact angle of water was 89°.

### [Example 1-13]

The nonwoven fabric was coated in the same manner as in Example 1-1, except that in the concavo-convex PE sheet, the pitch W1 of the concavity and convexity was 600 µm, the height h was 100 µm, and the space W2/pitch W1 was 0.25. The contact angle of water was 85°.

### [Example 1-14]

The nonwoven fabric was coated in the same manner as in Example 1-1, except that in the concavo-convex PE sheet, the pitch W1 of the concavity and convexity was 600 µm, the height h was 130 µm, and the space W2/pitch W1 was 0.60. The contact angle of water was 80°.

### [Comparative Example 1-1]

The nonwoven fabric was coated in the same manner as in Example 1-1, except that a concavo-convex PE sheet was replaced with a non-concavo-convex PE sheet. The contact angle of water was 89°.

### [Comparative Example 1-2]

The nonwoven fabric was coated in the same manner as in Example 1-3, except that a concavo-convex PTFE sheet was replaced with a non-concavo-convex PTFE sheet. The contact angle of water was 112°.

### [Comparative Example 1-3]

The nonwoven fabric was coated in the same manner as in Example 1-1, except that an aluminum alloy metal roller was used as the conveyor rollers T2 and T3 existing between the coating unit H and the drying unit D, and the roller surface was not covered by a concavo-convex PE sheet. The contact angle of the metal roller was 80°.

### [Evaluation]

A 100 mm × 100 mm region in the nonwoven fabric after coating was scanned by a transmission scanner having a resolution of 600dpi. A pixel having a brightness that is 5σ or more higher than the mode of the obtained brightness histogram was regarded as a pinhole. Based on the number of pinholes, uniformity was judged. When multiple pixels having a brightness that is 5σ or more higher were adjacent to each other, they were regarded as one pinhole. It can be judged that the smaller the number of pinholes, the higher the uniformity of coating. After 10 m coating, sampling was performed. The result is illustrated in Table 1.

**[Table 1]**

| | Sheet to cover roller | Pitch W1 (mm) | Height h (mm) | Space W2/ pitch W1 | Contact angle (°) | Number of pinholes |
|---|---|---|---|---|---|---|
| Example I-1 | Concavo-convex PE sheet | 600 | 100 | 0.45 | 88 | 0 |
| Example I-2 | Concavo-convex PP sheet | 700 | 120 | 0.40 | 94 | 5 |
| Example I-3 | Concavo-convex PTFE sheet | 600 | 100 | 0.45 | 110 | 0 |
| Example I-4 | Concavo-convex PE sheet | 450 | 110 | 0.55 | 90 | 70 |
| Example I-5 | Concavo-convex PE sheet | 560 | 200 | 0.57 | 89 | 56 |
| Example I-6 | Concavo-convex PE sheet | 600 | 50 | 0.60 | 89 | 67 |
| Example I-7 | Concavo-convex PE sheet | 1500 | 300 | 0.57 | 89 | 493 |
| Example I-8 | Concavo-convex PE sheet | 600 | 100 | 0.22 | 89 | 475 |
| Example I-9 | Concavo-convex PE sheet | 300 | 100 | 0.60 | 89 | 69 |
| Example I-10 | Concavo-convex PE sheet | 1000 | 120 | 0.50 | 89 | 70 |
| Example I-11 | Concavo-convex PE sheet | 700 | 75 | 0.40 | 89 | 7 |
| Example I-12 | Concavo-convex PE sheet | 500 | 100 | 0.45 | 89 | 4 |
| Example I-13 | Concavo-convex PE sheet | 600 | 100 | 0.25 | 85 | 460 |
| Example I-14 | Concavo-convex PE sheet | 600 | 130 | 0.60 | 80 | 480 |
| Comparative Example I-1 | PE sheet | None | None | None | 89 | 550 |
| Comparative Example I-2 | PTFE sheet | None | None | None | 112 | 540 |
| Comparative Example I-3 | None | None | None | None | 80 | 603 |

In Examples I-1 to 1-14 in which the surfaces of the conveyor rollers T2 and T3 were covered by a water-repellent concavo-convex sheet, the number of pinholes was less than 500. In contrast to this, in Comparative Examples 1-1 to 1-3 in which the surfaces of the conveyor rollers T2 and T3 were not covered by a water-repellent concavo-convex sheet, the contact between the conveyor rollers T2 and T3 and the nonwoven fabric increased, and the number of pinholes was more than 500.

Examples I-1 to 1-14 are compared as follows. The number of pinholes was 493 in Example 1-7 which has a pitch W1 of 1500 µm, the number of pinholes was 475 in Example 1-8 which has a space W2/pitch W1 of 0.22, the number of pinholes was 460 in Example 1-13 which has a space W2/pitch W1 of 0.25, and the number of pinholes was 480 in Example 1-14 which has a contact angle of 80°. In contrast to these, the number of pinholes was as small as 0 to 70 in Examples 1-1 to 1-6 and 1-9 to I-12 in which the pitch W1 was 300 to 1000 µm, the space W2/pitch W1 was 0.3 to 0.6, the height h of the concavity and convexity was 50 to 200 µm, and the contact angle of the concavo-convex sheet was 85° or more.

It is noted that in Examples 1-1 to 1-14, the coating speed is limited to 2 m/min in relation to the effective length of the drying unit. However, since the strike-through of the coating liquid is a time-dependent deteriorating phenomenon, a higher coating speed is rather advantageous. When an air dryer having a long effective length is used, the speed can be easily increased.

### <Conveyor roller Z(II)>

### [Example II-1]

By the nonwoven fabric coating machine schematically illustrated in Fig. 1, the nonwoven fabric was coated with the coating liquid such that the WET coating amount containing a medium (water) became 50 g/m². As the coating unit H, a die coater was used. As the drying unit D, a one-side air dryer having an effective length of 30 cm was used. With the one-side air dryer, hot air was blown onto a surface of the nonwoven fabric on which the coating liquid was not applied. Subsequently, with two one-side air dryers having an effective length of 30 cm, hot air was blown onto a surface of the nonwoven fabric on which the coating liquid was applied. The drying temperature was set at 100°C. As the conveyor roller T2 existing between the coating unit H and the conveyor roller T3 before the drying unit D, there was used a 60 mm diameter roller containing aluminum alloy as a core material, covered by a concavo-convex polyethylene (PE) sheet. The concavo-convex PE sheet was pasted with spray glue in such a manner that no overlap or space was generated. In the concavo-convex PE sheet, the shape of the convex portion was conical, the pitch W1 of the concavity and convexity was 600 µm, the height h of the concavity and convexity was 100 µm, the space W2/pitch W1 of the concavity and convexity was 0.45, and the contact angle of water was 88°. The coating speed was set at 30 m/min.

As the conveyor roller T3 before the drying unit D and the conveyor roller T4 inside the drying unit D, there was used a conveyor roller in which a diamond pattern as a concavo-convex shape was formed on the surface of a 60 mm diameter ultra high molecular weight polyethylene roller by a cut knurling process.

The cut knurling process was performed on the surfaces of the conveyor rollers T3 and T4 such that, as illustrated in Fig. 3, pitch W1 = 500 µm, height h = 190 µm, and space W2 = 226 µm were achieved, and the flat region was left on the top of the convexity of the concavo-convex shape. The contact angle of water was 88°.

### [Example II-2]

The nonwoven fabric was coated in the same manner as in Example II-1, except that a cut knurling process was performed on the surfaces of the conveyor rollers T3 and T4 such that the pattern was, as illustrated in Fig. 4, pitch W1 = 364 µm, height h = 157 µm, and space W2 = 182 µm, and the flat region was not left on the top. The contact angle of water was 88°.

### [Example II-3]

The nonwoven fabric was coated in the same manner as in Example II-1, except that a cut knurling process was performed on the surfaces of the conveyor rollers T3 and T4 such that the pattern was, as illustrated in Fig. 4, pitch W1 = 210 µm, height h = 94 µm, and space W2 = 105 µm, and the flat region was not left on the top. The contact angle of water was 88°.

### [Example II-4]

The nonwoven fabric was coated in the same manner as in Example II-1, except that a cut knurling process was performed on the surfaces of the conveyor rollers T3 and T4 such that the pattern was, as illustrated in Fig. 4, pitch W1 = 940 µm, height h = 400 µm, and space W2 = 470 µm, and the flat region was not left on the top. The contact angle of water was 88°.

### [Example II-5]

The nonwoven fabric was coated in the same manner as in Example II-1, except that laser engraving was performed instead of a cut knurling process such that the surface process pattern of the conveyor rollers T3 and T4 was, as illustrated in Fig. 4, pitch W1 = 600 µm, height h = 100 µm, and space W2 = 270 µm, and the flat region was not left on the top. The contact angle of water was 88°.

### [Example II-6]

The nonwoven fabric was coated in the same manner as in Example II-1, except that laser engraving was performed instead of a cut knurling process such that the surface process pattern of the conveyor rollers T3 and T4 was, as illustrated in Fig. 4, pitch W1 = 940 µm, height h = 120 µm, and space W2 = 475 µm, and the flat region was not left on the top. The contact angle of water was 88°.

### [Example II-7]

The nonwoven fabric was coated in the same manner as in Example II-1, except that the used conveyor rollers T3 and T4 were a roller obtained by forming a pyramid pattern as a concavo-convex shape on the surface of a stainless roller by a mill engraving process instead of cut knurling, winding a heat-shrinkable polypropylene film around the processed roller, and blowing air to the film with a hair dryer for covering, so as to achieve, as illustrated in Fig. 4, pitch W1 = 700 µm, height h = 120 µm, and space W2 = 350 µm, and the drying temperature was set at 80°C. The contact angle of water was 92°.

### [Example II-8]

The nonwoven fabric was coated in the same manner as in Example II-1, except that the used conveyor rollers T3 and T4 were a roller obtained by forming a concavo-convex shape of, as illustrate in Fig. 4, pitch W1 = 940 µm, height h = 120 µm, and space W2 = 475 µm on a polypropylene roller, instead of an ultra high molecular weight polyethylene roller, by a laser engraving process instead of a cut knurling process. The contact angle of water was 93°.

### [Example II-9]

The nonwoven fabric was coated in the same manner as in Example II-1, except that the used conveyor rollers T3 and T4 were a conveyor roller obtained by securing a concavo-convex polyethylene sheet of pitch W1 = 600 µm, height h = 100 µm, and space W2 = 270 µm onto an aluminum alloy roller surface having a diameter of 60 mm with a polyimide tape in such a manner that no overlap or space was generated. The shape of the embossed convex portion was set to be conical. The contact angle of water was 90°.

### [Comparative Example II-1]

The nonwoven fabric was coated in the same manner as in Example II-1, except that the used conveyor rollers T3 and T4 were an ultra high molecular weight polyethylene roller having a diameter of 60 mm in which a concavo-convex shape is not formed on the surface. The contact angle of water was 88°.

### [Comparative Example II-2]

The nonwoven fabric was coated in the same manner as in Example II-1, except that the used conveyor rollers T3 and T4 were a roller obtained by forming a diamond pattern as a concavo-convex shape on the surface of a stainless roller having a diameter of 60 mm by mill engraving and processing the roller such that, as illustrated in Fig. 4, pitch W1 = 580 µm, height h = 250 µm, and space W2 = 260 µm were achieved, and the flat region was not left on the top. The contact angle of water was 60°.

The coated surface after the coating of the nonwoven fabric was observed, and pinholes and coating unevenness were evaluated. The result is illustrated in Table 2.

**[Table 2]**

| | Conveyor roller | Conveyor roller core material | Concavity and convexity forming method | Water - repellent processing method | Pitch W1 (mm) | Height h (mm) | Space W2 (mm) | Contact angle (°) | Evaluation of coated surface |
|---|---|---|---|---|---|---|---|---|---|
| Example II-1 | Concavity and convexity formed roller | Ultra high molecular weight polyethylene | Cut knurling process | Core material | 500 | 190 | 226 | 88 | Good |
| Example II-2 | Concavity and convexity formed roller | Ultra high molecular weight polyethylene | Cut knurling process | Core material | 364 | 157 | 182 | 88 | Good |
| Example II-3 | Concavity and convexity formed roller | Ultra high molecular weight polyethylene | Cut knurling process | Core material | 210 | 94 | 105 | 88 | Good |
| Example II-4 | Concavity and convexity formed roller | Ultra high molecular weight polyethylene | Cut knurling process | Core material | 940 | 400 | 470 | 88 | Good |
| Example II-5 | Concavity and convexity formed roller | Ultra high molecular weight polyethylene | Laser engraving | Core material | 600 | 100 | 270 | 88 | Good |
| Example II-6 | Concavity and convexity formed roller | Ultra high molecular weight polyethylene | Laser engraving | Core material | 940 | 120 | 475 | 88 | Good |
| Example II-7 | Concavity and convexity formed roller | Stainless | Mill engraving | Polypropylene covering | 700 | 120 | 350 | 92 | Good |
| Example II-8 | Concavity and convexity formed roller | Polypropylene | Laser engraving | Core material | 940 | 120 | 475 | 93 | Good |
| Example II-9 | Concavo-convex PE sheet | Made of aluminum alloy | Concavo-convex PE sheet | PE | 600 | 100 | 270 | 90 | Thermally deformed, streaks appeared |
| Comparative Example II-1 | Non-concavo-convex roller | Ultra high molecular weight polyethylene | None | Core material | None | None | None | 88 | NG, roller fouling caused |
| Comparative Example II-2 | Concavity and convexity formed roller | Stainless | Mill engraving | None | 580 | 250 | 260 | 60 | NG, roller fouling caused |

In Examples II-1 to II-8, a good coated surface had been formed.

In Example II-9, the concavo-convex PE sheet secured to the conveyor roller surface deformed due to heat in the conveyor roller T4 inside the drying unit D, and streaks appeared on the coated surface. The conveyor roller Z covered by a concavo-convex PE sheet can be used as the conveyor rollers T2 and T3 but hardly used as the conveyor roller T4.

Also, in Comparative Examples II-1 and II-2, the strike-through of the coating liquid caused the fouling of the surfaces of the conveyor rollers T3 and T4, and reverse transfer thereof caused the appearance of streaks on the coated surface.

### <Conveyor roller Z(III)>

### [Example III-1]

By the apparatus schematically illustrated in Fig. 1, the nonwoven fabric was coated with the coating liquid such that the WET coating amount containing a medium (water) became 50 g/m². As the coating unit H, a die coater was used. As the drying unit D, a one-side air dryer having an effective length of 30 cm was used. With the one-side air dryer, hot air was blown onto a surface of the nonwoven fabric on which the coating liquid was not applied. Subsequently, with two one-side air dryers having an effective length of 30 cm, hot air was blown onto a surface of the nonwoven fabric on which the coating liquid was applied. As the conveyor roller T2 existing between the coating unit H and the conveyor roller before the drying unit D, there was used a 60 mm diameter roller containing aluminum alloy as a core material, covered by a concavo-convex polyethylene (PE) sheet. The concavo-convex PE sheet was pasted with spray glue in such a manner that no overlap or space was generated. In the concavo-convex PE sheet, the shape of the convex portion was conical, the pitch W1 of the concavity and convexity was 600 µm, the height h of the concavity and convexity was 100 µm, the space W2/pitch W1 of the concavity and convexity was 0.45, and the contact angle of water was 88°. The coating speed was set at 30 m/min.

The used conveyor rollers T3 and T4 before the drying unit D and inside the drying unit D were a conveyor roller obtained by forming a diamond pattern as a concavo-convex shape on the surface of a stainless roller by a cut knurling process and thereafter performing a PTFE composite plating process for a water-repellent process.

The cut knurling process was performed on the surfaces of the conveyor rollers T3 and T4 such that, as illustrated in Fig. 3, pitch W1 = 580 µm and height h = 200 µm were achieved, and the flat region was left on the top of the convexity of the concavo-convex shape.

### [Example III-2]

The nonwoven fabric was coated in the same manner as in Example III-1, except that a cut knurling process was performed on the surfaces of the conveyor rollers T3 and T4 such that the pattern was, as illustrated in Fig. 4, pitch W1 = 580 µm and height h = 250 µm, and the flat region was not left on the top.

### [Example III-3]

The nonwoven fabric was coated in the same manner as in Example III-1, except that the method of the water-repellent process for the conveyor rollers T3 and T4 was changed to a PTFE resin coating process.

### [Example III-4]

The nonwoven fabric was coated in the same manner as in Example III-1, except that an aluminum alloy roller was used instead of a stainless roller.

### [Example III-5]

The nonwoven fabric was coated in the same manner as in Example III-4, except that in Example III-4, a roller knurling process was performed instead of a cut knurling process to form a concavo-convex shape of pitch W1 = 500 µm and height h = 250 µm.

### [Example III-6]

The nonwoven fabric was coated in the same manner as in Example III-1, except that laser engraving was performed instead of a cut knurling process to form a concavo-convex shape of pitch W1 = 600 µm and height h = 100 µm, and a water-repellent process was changed to PTFE resin coating.

### [Example III-7]

The nonwoven fabric was coated in the same manner as in Example III-1, except that the used conveyor rollers T3 and T4 were a roller obtained by embossing a Teflon (registered trademark) sheet with pitch W1 = 600 µm and height h = 250 µm and securing the embossed sheet to the surface of an aluminum alloy roller with a polyimide tape. The shape of the embossed convex portion was set to be conical.

### [Example III-8]

The nonwoven fabric was coated in the same manner as in Example III-1, except that the used conveyor rollers T3 and T4 were a roller obtained by securing a concavo-convex PE sheet of pitch W1 = 600 µm and height h = 100 µm to the surface of an aluminum roller with a polyimide tape. The shape of the embossed convex portion was set to be conical.

### [Comparative Example III-1]

The nonwoven fabric was coated in the same manner as in Example III-1, except that the used conveyor rollers T3 and T4 were a stainless roller in which a concavo-convex shape was not formed on the surface.

### [Comparative Example III-2]

The nonwoven fabric was coated in the same manner as in Example III-1, except that the used conveyor rollers T3 and T4 were a stainless roller in which a concavo-convex shape was formed on the surface by a cut knurling process. A water-repellent process was not performed to the surface.

The coated surface after the coating of the nonwoven fabric was observed, and pinholes and coating unevenness were evaluated. The result is illustrated in Table 3.

**[Table 3]**

| | Conveyor roller | Conveyor roller core material | Concavity and convexity forming method | Water-repellent processing method | Pitch W1 (mm) | Depth (mm) | Contact angle (°) | Evaluation of coated surface |
|---|---|---|---|---|---|---|---|---|
| Example III-1 | Concavity and convexity formed roller | Stainless roller | Cut knurling process | PTFE composite plating | 580 | 200 | 105 | Good |
| Example III-2 | Concavity and convexity formed roller | Stainless roller | Cut knurling process | PTFE composite plating | 580 | 250 | 105 | Good |
| Example III-3 | Concavity and convexity formed roller | Stainless roller | Cut knurling process | PTFE resin coating | 580 | 200 | 114 | Good |
| Example III-4 | Concavity and convexity formed roller | Roller made of aluminum alloy | Cut knurling process | PTFE composite plating | 580 | 200 | 105 | Good |
| Example III-5 | Concavity and convexity formed roller | Roller made of aluminum alloy | Roller knurling process | PTFE composite plating | 500 | 250 | 105 | Good, flutter due to roller distortion observed |
| Example III-6 | Concavity and convexity formed roller | Stainless roller | Laser engraving | PTFE resin coating | 600 | 100 | 114 | Good, time and labor taken for manufacture |
| Example III-7 | Teflon sheet | Roller made of aluminum alloy + Teflon | Teflon embossing | None | 600 | 250 | 114 | Good, replaced every time without durability |
| Example III-8 | Concavo-convex PE sheet | Roller made of aluminum alloy + PE | Concavo-convex PE sheet | None | 600 | 100 | 90 | Thermally deformed, streaks appeared |
| Comparative Example III-1 | Non-concavo-convex metal roller | Stainless roller | (None) | None | None | None | 60 | NG, roller fouling caused |
| Comparative Example III-2 | Concavity and convexity formed roller | Stainless roller | Cut knurling process | None | 580 | 200 | 60 | NG, roller fouling caused |

In Examples III-1 to III-7, a good coated surface had been formed. However, in Example III-5, the roller knurling process caused dimensional change (distortion) of the aluminum alloy roller, and the pass line fluctuation of the sheet during conveyance was observed. However, an influence on the coated surface was not observed.

In the laser engraving process used in Example III-6, a time was taken for manufacture, and the height h was limited, compared to in the cut knurling process.

In the conveyor rollers T3 and T4 used in Example III-7, the Teflon sheet had been damaged, and replacement had to be performed.

In Example III-8, the PE sheet formed on the conveyor roller surface deformed due to heat in the conveyor roller T4 inside the drying unit D, and streaks appeared on the coated surface. The conveyor roller Z covered by a concavo-convex PE sheet can be used as the conveyor rollers T2 and T3 but hardly used as the conveyor roller T4.

Also, in Comparative Examples III-1 and III-2, the surfaces of the conveyor rollers T3 and T4 were fouled by a strike-through liquid, and reverse transfer thereof caused the appearance of streaks on the coated surface.

### <Conveyor roller Z(IV)>

### [Example IV-1]

Fig. 1 is a schematic diagram illustrating an example of the nonwoven fabric coating machine of the present invention. The nonwoven fabric coating machine is an apparatus that reels out the nonwoven fabric from a nonwoven fabric roll M made of the nonwoven fabric, conveys the nonwoven fabric by the conveying unit including the conveyor rollers T1 to T4, and applies and dries the coating liquid by the coating unit H and the drying unit D.

Coating was performed using a die coater as the coating unit H such that the WET coating amount containing a medium (water) became 50 g/m². As the drying unit D, a one-side air dryer having an effective length of 30 cm was used. With the one-side air dryer, hot air was blown onto a surface of the nonwoven fabric on which the coating liquid was not applied. Subsequently, with two one-side air dryers having an effective length of 30 cm, hot air was blown onto a surface of the nonwoven fabric on which the coating liquid was applied. The drying temperature was set at 100°C.

As the conveyor roller T2 existing between the coating unit H and the conveyor roller T3 before the drying unit D, there was used a 60 mm diameter roller containing aluminum alloy as a core material, covered by a concavo-convex polyethylene (PE) sheet. The concavo-convex PE sheet was pasted with spray glue in such a manner that no overlap or space was generated. The coating speed was set at 30 m/min.

As the conveyor roller T3 before the drying unit D and the conveyor roller T4 inside the drying unit D, a roller subjected to a thermal spraying water-repellent process was used. The thermal spraying was nickel-based thermal spraying. The used roller had been coated with a silicone-based resin for a water-repellent process. The surface roughness was Ra: 10 µm and Rz: 75 µm. The contact angle was 106°.

The coated surface after the coating of the nonwoven fabric was observed. As a result, pinholes and coating unevenness caused by strike-through were not observed, and a good coated surface had been formed.

For the purpose of confirming durability, the coating liquid was forcibly fixed to the conveyor roller T4 in the drying unit D, and the obtained product was thereafter subjected to washing and removal work and coated again in the same manner as above. The obtained coated surface was observed. In the washing and removal work, washing with water was firstly performed, and many remaining coating liquid-fixed portions were subjected to physical force with a metal spatula for removing the fixed product. Also, the fixed product in the concave portion was removed by pasting an adhesive sheet.

The coated surface after the coating was observed. As a result, a good coated surface similar to that before washing work had been formed.

The conveyor roller T4 was subjected to the above-described work of fixing the coating liquid - washing and removal 30 times and then coated again in the same manner as above. The coated surface was observed. As a result, the good coated surface as in the initial state had been formed.

### [Comparative Example IV-1]

The coating of the nonwoven fabric and the observation of the coated surface were performed in the same manner as in Example 30, except that in Example IV-1, the used conveyor roller T3 before the drying unit D and the used conveyor roller T4 inside the drying unit D were a roller subjected to only a thermal spraying process and not subjected to a water-repellent process, instead of a roller subjected to a thermal spraying water-repellent process. The surface roughness of the roller subjected to only a thermal spraying process was Ra: 15 µm and Rz: 100 µm, and the contact angle was 80°.

The coated surface after the coating of the nonwoven fabric was observed. As a result, pinholes and coating unevenness caused by strike-through were observed, and a good coated surface could not be formed.

### [Comparative Example IV-2]

The coating of the nonwoven fabric and the observation of the coated surface were performed in the same manner as in Example 30, except that in Example IV-1, the used conveyor roller T3 before the drying unit D and the used conveyor roller T4 inside the drying unit D were a roller subjected to only a water-repellent process and not subjected to thermal spraying. The surface roughness of the roller subjected to only a water-repellent process was Ra: 1 µm and Rz: 5 µm, and the contact angle was 102°.

The coated surface after the coating of the nonwoven fabric was observed. As a result, pinholes and coating unevenness caused by strike-through were observed, and a good coated surface could not be formed.

### <Conveyor roller Z(V)>

### [Example V-1]

Fig. 1 is a schematic diagram illustrating an example of the nonwoven fabric coating machine of the present invention. The nonwoven fabric coating machine is an apparatus that reels out the nonwoven fabric from a nonwoven fabric roll M made of the nonwoven fabric, conveys the nonwoven fabric by the conveying unit including the conveyor rollers T1 to T4, and applies and dries the coating liquid by the coating unit H and the drying unit D.

Coating was performed using a die coater as the coating unit H such that the WET coating amount containing a medium (water) became 50 g/m². As the drying unit D, a one-side air dryer having an effective length of 30 cm was used. With the one-side air dryer, hot air was blown onto a surface of the nonwoven fabric on which the coating liquid was not applied. Subsequently, with two one-side air dryers having an effective length of 30 cm, hot air was blown onto a surface of the nonwoven fabric on which the coating liquid was applied. The drying temperature was set at 100°C.

As the conveyor roller T2 existing between the coating unit H and the conveyor roller T3 before the drying unit D, there was used a 60 mm diameter roller containing aluminum alloy as a core material, covered by a concavo-convex polyethylene (PE) sheet. The concavo-convex PE sheet was pasted with spray glue in such a manner that no overlap or space was generated. The coating speed was set at 30 m/min.

As the conveyor roller T3 before the drying unit D and the conveyor roller T4 inside the drying unit D, a roller subjected to a blasting water-repellent plating process was used. Glass beads were used as a projection material in the blasting process, and nickel·PTFE composite plating was used in the water-repellent plating process. The surface roughness was Ra: 15 µm. The contact angle was 120°. The period A was 500 µm.

The coated surface after the coating of the nonwoven fabric was observed. As a result, pinholes and coating unevenness caused by strike-through were not observed, and a good coated surface had been formed.

For the purpose of confirming durability, the coating liquid was forcibly fixed to the conveyor roller T4 in the drying unit D, and the obtained product was thereafter subjected to washing and removal work and coated again in the same manner as above. The obtained coated surface was observed. The washing and removal work was performed by washing with water. When the coating liquid-fixed portion remained, physical force was added with a cloth wiper to remove the fixed product.

The coated surface after the coating was observed. As a result, a good coated surface similar to that before washing work had been formed.

The conveyor roller T4 was subjected to the above-described work of fixing the coating liquid - washing and removal 30 times and coated again in the same manner as above. The coated surface was observed. As a result, the same good coated surface as in the initial state had been formed.

### [Comparative Example V-1]

The coating of the nonwoven fabric and the observation of the coated surface were performed in the same manner as in Example V-1, except that in Example V-1, the used conveyor roller T3 before the drying unit D and the used conveyor roller T4 inside the drying unit D were a roller subjected to only a blasting process and not subjected to a blasting water-repellent plating process, instead of a roller subjected to a blasting water-repellent plating process. The surface roughness of the roller subjected to only a blasting process was Ra: 15 µm, and the contact angle was 60°. The period A was 500 µm.

As a result of the coating of the nonwoven fabric, in the conveyor rollers T3 and T4, the coating liquid which had struck through were transferred, pinholes and coating unevenness were observed on the coated surface, and a good coated surface could not be formed.

### [Comparative Example V-2]

The coating of the nonwoven fabric and the observation of the coated surface were performed in the same manner as in Example V-1, except that in Example V-1, the used conveyor roller T3 before the drying unit D and the used conveyor roller T4 inside the drying unit D were a roller subjected to only a water-repellent plating process and not subjected to a blasting process. The surface roughness of the roller subjected to only a water-repellent plating process was Ra: 1 µm, and the contact angle was 120°. The period A was 150 µm.

As a result of the coating of the nonwoven fabric, in the conveyor rollers T3 and T4, the coating liquid which had struck through was transferred, pinholes and coating unevenness were observed on the coated surface, and a good coated surface could not be formed.

### <Conveyor roller Z(VI)>

### [Example VI-1]

By the nonwoven fabric coating machine schematically illustrated in Fig. 1, the nonwoven fabric was coated with the coating liquid such that the WET coating amount containing a medium (water) became 50 g/m². As the coating unit H, a die coater was used. As the drying unit D, a one-side air dryer having an effective length of 30 cm was used. With the one-side air dryer, hot air was blown onto a surface of the nonwoven fabric on which the coating liquid was not applied. Subsequently, with two one-side air dryers having an effective length of 30 cm, hot air was blown onto a surface of the nonwoven fabric on which the coating liquid was applied. The drying temperature was set at 100°C. The coating speed was set at 30 m/min.

As the conveyor roller T2 existing between the coating unit H and the conveyor roller before the drying unit D, there was used a 60 mm diameter roller containing aluminum alloy as a core material, covered by a concavo-convex polyethylene sheet. The concavo-convex polyethylene sheet was pasted with spray glue in such a manner that no overlap or space was generated.

As the conveyor roller T3 before the drying unit D and the conveyor roller T4 inside the drying unit D, there was used a 60 mm diameter roller containing aluminum alloy as a core material, covered by a water-repellent fabric. The water-repellent fabric was secured with a polyimide tape in such a manner that no overlap or space was generated.

The water-repellent fabric used in the conveyor rollers T3 and T4 was obtained by impregnating a glass cloth in accordance with EP08B of JIS R 3414:2012 with a polytetrafluoroethylene resin to dispose a water-repellent resin layer. The surface roughness was Ra: 5 µm, and the contact angle of water was 110°.

### [Example VI-2]

The nonwoven fabric was coated in the same manner as in Example VI-1, except that the water-repellent fabric used in the conveyor rollers T3 and T4 was obtained by impregnating a glass cloth in accordance with EP06B of JIS R 3414:2012 with a polytetrafluoroethylene resin to dispose a water-repellent resin layer. The surface roughness was Ra: 3 µm, and the contact angle of water was 110°.

### [Example VI-3]

The nonwoven fabric was coated in the same manner as in Example VI-1, except that the water-repellent fabric used in the conveyor rollers T3 and T4 was obtained by impregnating a glass cloth in accordance with EP25 of JIS R 3414:2012 with a polytetrafluoroethylene resin to dispose a water-repellent resin layer. The surface roughness was Ra: 30 µm, and the contact angle of water was 110°.

In Examples VI-1 to VI-2, pinholes and coating unevenness caused by strike-through were not observed, and a good coated surface had been formed. In Example VI-3, the concavo-convex pattern of the water-repellent fabric was transferred, but pinholes and coating unevenness caused by strike-through were not observed. Also, even when the coating liquid was intentionally fixed to the conveyor rollers T3 and T4, the coating liquid could be easily wiped up with a water-wetted cloth wiper. From this fact, even if the coating liquid is fixed during coating, washing and removal work is easily performed. After this fixing-washing work was performed 30 times, the nonwoven fabric was coated again in the same manner as above. As a result, the same good coated surface as in the initial state had been formed.

### [Comparative Example VI-1]

The nonwoven fabric was coated in the same manner as in Example VI-1, except that the used conveyor rollers T3 and T4 were a conveyor roller obtained by securing a glass cloth in accordance with EP06B of JIS R 3414:2012 with a polyimide tape. The surface roughness was Ra: 3 µm, and the contact angle of water could not be measured.

### [Comparative Example VI-2]

The nonwoven fabric was coated in the same manner as in Example VI-1, except that as the conveyor rollers T3 and T4, a roller coated with a polytetrafluoroethylene resin was used instead of a roller covered by a water-repellent fabric. The surface roughness was Ra: 1 µm, and the contact angle of water was 110°.

In Comparative Examples VI-1 and VI-2, pinholes and coating unevenness caused by strike-through were observed, and a good coated surface could not be formed. Also, in Comparative Example VI-1, the coating liquid which had struck through had been fixed to the surface of the conveyor roller T4 inside the drying unit D.

### INDUSTRIAL APPLICABILITY

The coating of a nonwoven fabric using the nonwoven fabric coating machine of the present invention can be suitably used for the production of a product in which a nonwoven fabric is coated with various coating liquids, for example, for the production of a separator for lithium ion batteries in which a nonwoven fabric is coated with inorganic particles.

### LIST OF REFERENCE NUMERALS

- 1: surface shape after thermal spraying process
- 2: surface shape after water-repellent process
- 3: convex portion (before damaged)
- 4: convex portion (after damaged)
- 1': surface shape after blasting process
- 2': surface shape after water-repellent plating process
- D: drying unit
- T1: conveyor roller
- T2: conveyor roller
- T3: conveyor roller
- T4: conveyor roller
- H: coating unit
- M: nonwoven fabric roll
- W1: pitch
- W2: space
- h: height
- α: concavo-convex period
- β: microscopic concavo-convex period
- A: period
- a: warp
- b: woof
- c: space
- d: water-repellent resin layer

## Claims

1. A nonwoven fabric coating machine comprising:
a coating unit that applies a coating liquid onto a nonwoven fabric;
a conveying unit in which the nonwoven fabric applied with the coating liquid is conveyed while supported by a conveyor roller; and
a drying unit that dries the applied coating liquid,
wherein a surface of the conveyor roller has a concavo-convex shape and water repellency.

2. The nonwoven fabric coating machine according to claim 1, wherein the conveyor roller is a roller having a surface covered by a water-repellent concavo-convex sheet.

3. The nonwoven fabric coating machine according to claim 1, wherein the conveyor roller is a roller having a surface that is made of polyolefin and has a concavo-convex shape formed by machining.

4. The nonwoven fabric coating machine according to claim 1, wherein the conveyor roller is a roller having a surface that has a concavo-convex shape formed by a processing method selected from the group consisting of a cut knurling process, a roller knurling process, and laser engraving.

5. The nonwoven fabric coating machine according to claim 4, wherein the conveyor roller is a metal roller.

6. The nonwoven fabric coating machine according to any one of claims 2 to 5, wherein a pitch of a concavity and convexity is 300 to 1000 µm, a space/pitch is 0.3 to 0.6, a height of a concavity and convexity is 50 to 200 µm, and a surface contact angle is 85° or more.

7. The nonwoven fabric coating machine according to claim 1, wherein the conveyor roller is a roller subjected to a thermal spraying water-repellent process.

8. The nonwoven fabric coating machine according to claim 1, wherein the conveyor roller is a roller subjected to a blasting water-repellent plating process.

9. The nonwoven fabric coating machine according to claim 1, wherein the conveyor roller is a roller covered by a water-repellent fabric.
